# EUROPEAN PATENT APPLICATION

(11) **EP 1 705 547 A1**
(43) Date of publication of application: **27.09.2006**
(21) Application number: 05290681.5
(22) Date of filing: 25.03.2005
(51) Int. Cl.: G06F 1/00, G06Q 10/00

(54) **Spam prevention by legal user database and user authentication**

(71) Applicant: ALCATEL, 75008 Paris (FR)
(72) Inventor: de Cnodder, Stefaan Jozef, 2275 Lille (BE)
(74) Representative: Narmon, Gisèle Marie Thérèse

(57) **Abstract**

A method for controlling the transmission of messages (Emails) from a first user (User A) to a second user (User B) in order to detect the transmission of unwanted Emails or spam. The transmission of an Email from User A to User B occurs via a first mail server, associated to a first Internet Service Provider (ISP A) of user A, and a second mail server, associated to a second Internet Service Provider (ISP B) of user B. In this method, ISP A transmits identification parameters to a legal user database provided with an "Email Name Service" (ENS). The parameters comprise trustworthy level of the User A. At the reception of the Email, the second mail server checks the legal user database and transfers the Email to User B only if User A is identified by the Email Name Service and if his/her trustworthy level is acceptable.

## Description

The present invention relates to a method to transmit a message from a first user to a second user, said method comprising the steps of:
- said first user transferring said message to a first mail server associated to a first Internet Service Provider of said first user,
- said first mail server transmitting said message to a second mail server associated to a second Internet Service Provider of said second user, and
- said second mail server transferring said message to said second user.

Such a method is generally known in the art to transmit messages, e.g. Emails between users. With the known method, a user may transmit any kind of message, even unwanted messages. The transmission of unwanted messages, generally referred to as SPAM in Email boxes, is a big problem and the situation will likely to get worse in the future, for instance when the spam Emails will contain big attachments or when the amount of spam would increase significantly. It is clear that spam is a real danger for the future existence of Email, which is today a key application for residential users and for business users as well.

A known method to prevent spam is to install filters that look to the content of Emails and scans it for a certain word or word groups. This method only has a low success: most of the spams are not recognized by these filters and sometimes non-spam Emails are marked as spam by these filters. The reason for the former problem is that senders of spam also know how the spam filters work and therefore they hide particular words in the Email by adding for instance underscores between the letters of the words. Spam filters will never get a good success and a never-ending investment is needed to update the filters to the newest spam tricks to avoid the filters.

An object of the present invention is to provide a method of the above known type but improved with respect to fighting against spam.

According to the invention, this object is achieved due to the fact that said method further comprises the steps of:
- the Internet Service Provider providing identification parameters of said first user to a legal user database, said identification parameters comprising trustworthy level of said first user, and
- said second mail server checking said legal user database and transferring said message to said second user only if said first user is identified in said legal user database and if the trustworthy level of said first user is acceptable.

In this way, the first user is no longer encouraged to send spam because his identity is known and he can be punished.

It is to be noted that a similar method is known by identifying the sending service provider, which goes often together with authentication methods between service providers. For instance, in the known "Sender ID technology" of Microsoft™ verification happens at a high granularity: when the domain name is coming from a trusted source and when the signature is correct, the message (Email) is considered as not being spam. This known mechanism can be used for trusted domains, but free Email providers cannot guarantee this. In other words, just checking the sending domain is not sufficient because a lot of spam may be sent from Yahoo™ or Hotmail™ domains.

In a preferred characterizing embodiment of the present invention, said legal user database provides Email Name Service, and said first user has subscribed to the Email Name Service of said legal user database.

When the first user has subscribed to this Email Name Service, the latter knows private information, i.e. the identification parameters. However, these identification parameters are not exposed to other users. When the second user is receiving an Email from the first user, a lookup is done to the Email Name Service to make sure that the first user is known as reliable by a legal instance.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

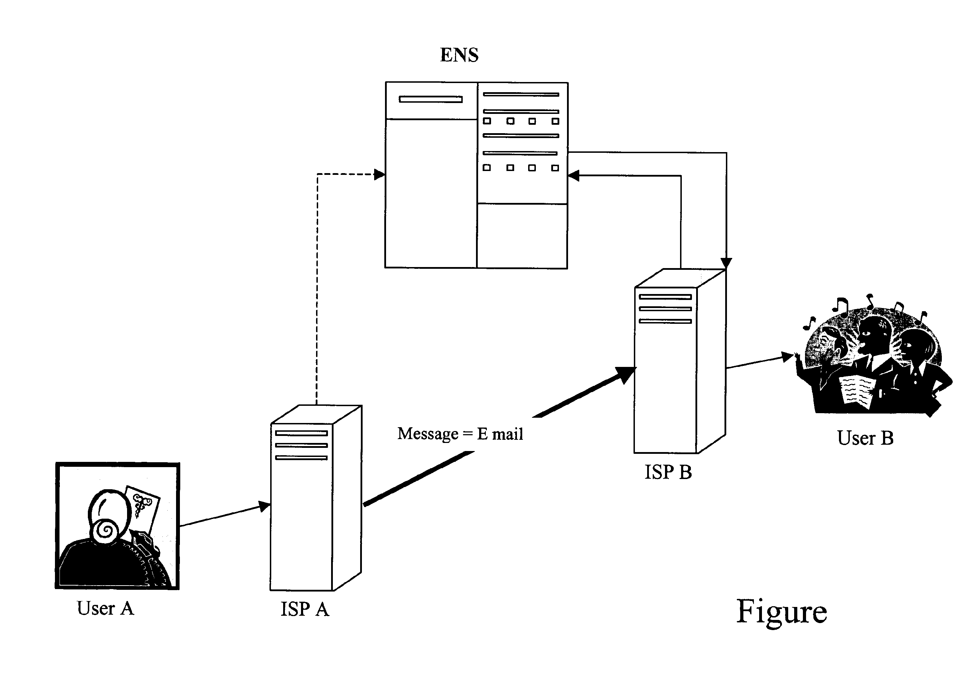

The above and other objects and features of the invention will become more apparent and the invention itself will be best understood by referring to the following description of an embodiment taken in conjunction with the accompanying drawing wherein the single Figure represents a method to transmit a message from a first user A to a second user B according to the invention.

The present invention relates to a method for preventing the transmission of spam, as unwanted messages, between a first user A and a second user B coupled through a telecommunication network as will be described below by making reference to the Figure. User A is coupled to a first mail server associated to a first Internet Service Provider ISP A, whilst user B is coupled to a second mail server associated to a second Internet Service Provider ISP B. The Internet Service Providers ISP A and ISP B are coupled together and adapted to transmit messages, preferably Emails, between each other. This allows the user A to transmit a message to the user B via ISP A and ISP B, and vice versa. To prevent spam to be transmitted, say from user A to user B, both Internet Service Providers ISP A and ISP B are coupled to a legal user database that provides Email Name Service ENS.

The legal user database is maintained by a legal instance, or instances, and contains a mapping of the Email address of the user A by the first Internet Service Providers ISP A, as well as identification parameters or private information of that user A such as the user's name, address and credit card number. The identification parameters stored in the Email Name Service ENS via ISP A comprises trustworthy level of the first user A. This private information is known to the legal instance, but is not made public. The physical implementation of the legal user database has to be hierarchical since this is a huge database and therefore it looks very similar to a Domain Name Server (DNS) that contains mapping of IP addresses to user names, and vice versa.

When a user, say user B, receives an Email from user A, the Email address of the sender, i.e. user A, is looked-up in the Email ENS Service by the second Internet Service Providers ISP B. If the Email address of user A is not in ENS, then this Email address is considered as belonging to an unknown individual and is considered as spam. When the Email address of user A exists in ENS, then the Email is not seen as spam since user A is considered as reliable.

In case a user B receives spam from another user that is in ENS, a complain can be filed at the owner of ENS who knows the true identity of the spammer. With such a mechanism it is easy to track and punish the spammer, and hence users in ENS will no longer send spam.

Using the Email address of another user can be discouraged by using a shared secret with the Email Name Service ENS, similarly to what is done with the Domain Name Server (DNS). Before sending an Email, the ENS Service is asked to compute a signature for the Email, and the receiver of the Email can check this signature by asking it to the ENS Service.

A virus in the PC of the sender of the Email is another problem. The virus can have potential access to, for instance, the private encryption keys in case of public key to sign Emails. Such keys are usually stored somewhere on the hard disk and hence accessible for viruses. When a user sees that he/she is infected by such a virus, the user best changes its public key (but not the private keys yet) and switches to a manual or another password known by himself and the ENS Service as long the virus is not removed. In this way, the receiver of the Email can still let the ENS Service check the digital signature. Probably this cannot be made 100% secure but at least it can be made such that viruses need to be extremely clever to discover the changed password. It is also expected that when ENS is used to prevent spam, the amount of spam will decrease drastically and thus also virus infections will be far less often because most viruses are received via Email.

There exists many cases where spam is transmitted, but the key idea remains that the Email Name Service ENS checks the sender's identity.

Because a large amount of data has to be stored, a hierarchical implementation is required. This can be achieved easily because the Email addresses are hierarchical as well. A lot of ENS Servers could have to be contacted for each Email, but since Email is not time critical, processing power should not be a real issue.

As an application of the Email Name Service ENS, it is to be noted that a small fee could be charged, e.g. by an operator, for each Email checked by ENS for this service. With the large amount of Email addresses, this can generate a lot of revenues. Differential charging rules can also be applied: business users can be charged differently than private users. A partial service may also be offered. A user may only be registered in ENS such that he/she can send Emails without being considered as spam by the receiver, but cannot benefit from the checking of received Emails.

As a conclusion, the Email Name Server ENS provides an outstanding protection of Email users against spam, without requiring updating constantly any filtering database. It further offers a method to officially file a complaint against somebody. If multiple such complaints are received, the owner of the database that allowed registering that particular user to ENS has to take appropriate actions.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to transmit a message (Email) from a first user (User A) to a second user (User B), said method comprising the steps of:
- said first user transferring said message to a first mail server associated to a first Internet Service Provider (ISP A) of said first user,
- said first mail server transmitting said message to a second mail server associated to a second Internet Service Provider (ISP B) of said second user, and
- said second mail server transferring said message to said second user,
***characterized in that*** said method further comprises the steps of:
- said first Internet Service Provider (ISP A) providing identification parameters of said first user (User A) to a legal user database, said identification parameters comprising trustworthy level of said first user, and
- said second mail server checking said legal user database and transferring said message to said second user (User B) only if said first user is identified in said legal user database and if the trustworthy level of said first user is acceptable.

2. The method according to claim 1, ***characterized in that*** said legal user database provides Email Name Service (ENS).

3. The method according to claim 2, ***characterized in that*** said first user (User A) has subscribed to the Email Name Service (ENS) of said legal user database.

4. The method according to claim 1, ***characterized in that*** said message is an Email.
